# EUROPEAN PATENT SPECIFICATION

(11) **EP 4 484 896 B1**
(45) Date of publication and mention of the grant of the patent: **08.04.2026**
(21) Application number: 24183124.7
(22) Date of filing: 19.06.2024
(51) Int. Cl.: G01C 21/36, G06F 16/00, G06Q 10/06, G06Q 10/08, G06Q 30/018, G06Q 50/02, H04L 9/00

(54) **INFORMATION PROCESSING METHOD**
INFORMATIONSVERARBEITUNGSVERFAHREN
PROCÉDÉ DE TRAITEMENT D'INFORMATIONS

(30) Priority: 29.06.2023 JP 2023107362
(43) Date of publication of application: 01.01.2025
(73) Proprietor: DENSO CORPORATION, Kariya-city, Aichi-pref. 448-8661 (JP)
(72) Inventor: OKABE, Tatsuya, Kariya-city, Aichi-pref. 448-8661 (JP)
(74) Representative: Winter, Brandl - Partnerschaft mbB

(56) References cited:
- WO-A1-2022/149501
- US-A1- 2011 099 489
- US-A1- 2023 162 163
- US-A1- 2023 342 703

## Description

### TECHNICAL FIELD

The disclosure in this specification relates to a technique for processing and accumulating emissions information related to greenhouse gas emissions.

### BACKGROUND

As described in Patent Literature 1 (JP 2022-106291 A), a method of calculating greenhouse gas emissions varies depending on the country or region where the final product is used, in other words, the destination of the final product. Therefore, in Patent Literature 1, when the destination is unconfirmed, a user operation is permitted to set a provisional destination. This allows an end user to confirm an amount of greenhouse gas emissions calculated using a calculation method corresponding to the provisional destination.

Moreover, WO 2022 149501 A1 discloses a data processing server, which manages information linked to a particular item, wherein a plurality of pieces of item information with different cycles of input or measurement are obtained and then are individually stored in association with a plurality of different blockchains.

### SUMMARY

In Patent Literature 1, when the destination is unconfirmed, the total value of a confirmed emission amount and an unconfirmed emission amount is displayed on a screen as carbon footprint. Therefore, even if the unconfirmed emission amount is quite small, an impression that the presented carbon footprint is unreliable may be caused due to the unconfirmed emission amount. Therefore, the method disclosed in Patent Literature 1 has room for improvement in terms of handling greenhouse gas emissions associated with an object whose destination is unconfirmed.

An object of the present disclosure is to provide an information processing method, a storage medium producing method, and an information accumulating method that are capable of appropriately handling greenhouse gas emissions associated with an object whose destination is unconfirmed. The invention is set out in the appended claims.

According to an aspect of the present disclosure, an information processing method executed by at least one processor for generating emissions information relating to an emission amount of greenhouse gas associated with an object, the method comprising: a step of searching traceability information of the object for confirmed information about a destination of the object based on the emission amount associated with the object including an unconfirmed amount due to the destination of the object being unconfirmed; and a step of preparing confirmed data and unconfirmed data based on the confirmed information about the destination being absent in the traceability information, the confirmed data indicating a confirmed amount of the emission amount, the unconfirmed data indicating the unconfirmed amount of the emission amount calculated using a provisional formula.

According to another aspect of the present disclosed, a storage medium producing method executed by at least one processor for producing a storage medium storing emissions information relating to an emission amount of greenhouse gas associated with an object, the method comprising: a step of searching traceability information of the object for confirmed information about a destination of the object based on the emission amount associated with the object including an unconfirmed amount due to the destination of the object being unconfirmed; a step of preparing confirmed data and unconfirmed data based on the confirmed information about the destination being absent in the traceability information, the confirmed data indicating a confirmed amount of the emission amount, the unconfirmed data indicating the unconfirmed amount of the emission amount calculated using a provisional formula; a step of storing the emissions information including the confirmed data and the unconfirmed data in the storage medium.

According to these aspects, when there is no confirmed information on the destination of the target object, the unconfirmed data indicating the unconfirmed emission amount and calculated using the provisional formula is prepared separately from the confirmed data indicating the confirmed emission amount. Accordingly, by separating the unconfirmed data from confirmed data, it becomes possible to appropriately handle the unconfirmed emission amount of the greenhouse gas.

According to another aspect of the present disclosed, an information accumulating method executed by at least one processor for accumulating emissions information relating to an emission amount of greenhouse gas associated with an object in a database, the method comprising: a step of calculating unconfirmed data indicating an unconfirmed amount of the emission amount by using a provisional formula based on the emission amount associated with the object including the unconfirmed amount due to a destination of the object being unconfirmed; and a step of storing the unconfirmed data and confirmed data in the database together with unconfirmed information, the confirmed data indicating a confirmed amount of the emission amount, the undetermined information indicating that the destination is unconfirmed.

According to the aspect, when the destination of the target object IM is unconfirmed, the unconfirmed data indicating the unconfirmed emission amount is calculated using the provisional formula. The unconfirmed data prepared separately from the confirmed data indicating the confirmed emission amount is stored in the database together with the unconfirmed information indicating that the destination is unconfirmed. In other words, the unconfirmed data is separated from the confirmed data, and the cause of the unconfirmed emission amount, i.e., the unconfirmed information on the destination is clearly indicated. Accordingly, the unconfirmed emission amount of the greenhouse gas can be appropriately handled.

### BRIEF DESCRIPTION OF DRAWINGS

FIG. 1 is a block diagram illustrating an information processing system according to an embodiment of the present disclosure.
FIG. 2 is a diagram illustrating details of emissions information accumulated in a database and details of a carbon footprint display to an end user.
FIG. 3 is a table showing a list of CFP formulas prepared in advance.
FIG. 4 is a diagram illustrating details of a CFP formula.
FIG. 5 is a sequence diagram illustrating details of a process for accumulating traceability information, executed by a data processing terminal and a data processing server.
FIG. 6 is a flowchart illustrating details of a sub-process for generating emissions information related to greenhouse gas emissions.
FIG. 7 is a sequence diagram illustrating details of a traceability information inquiry process, executed by the data processing terminal and the data processing server.

### DETAILED DESCRIPTION

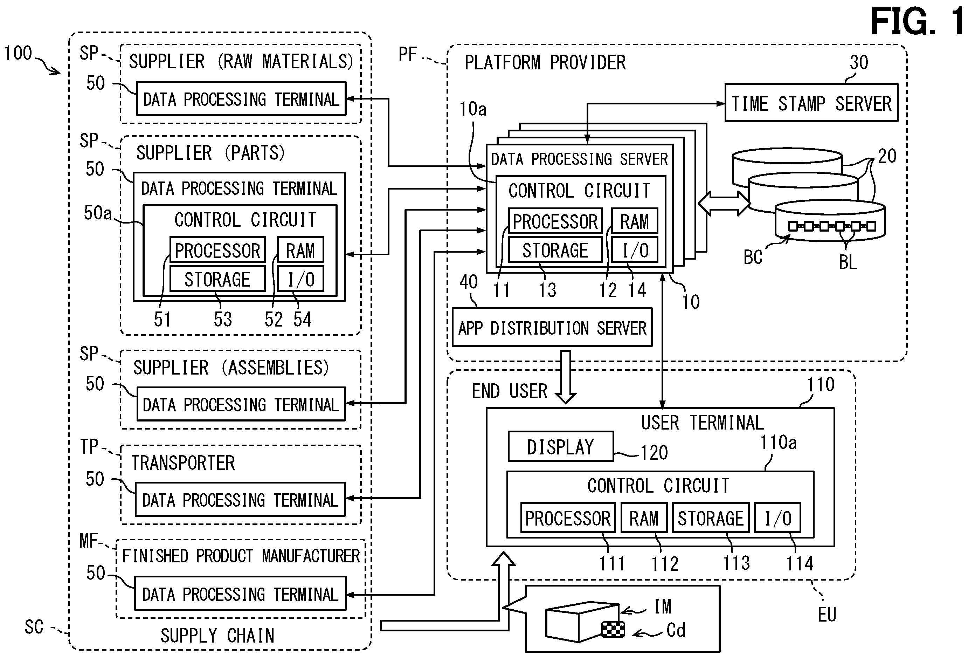

An information processing system 100 according to an embodiment of the present disclosure shown in FIG. 1 is applied to a supply chain SC consisting of multiple traders, and manages transaction records of items traded between each of the traders. A transaction record serves as traceability information that provides traceability of an item traded between traders. The transaction record contains a number of pieces of information, such as time and place where the transaction occurred. In a case where the item is an industrial product, for example, the transaction record includes information regarding raw materials, information regarding processing and assembly, and distribution routes. In a case where the item is a foodstuff, the transaction record may further include information indicating a best-before expiration date or a use-by expiration date.

The supply chain SC is a connection between traders to deliver industrial products, agricultural products, seafood, and the like to an end user EU. For example, the supply chain SC that supplies industrial products to the end user EU includes, as the traders, a large number of suppliers SP who procure raw materials, manufacture parts, and assemble parts, a transporter TP, and a finished product manufacturer MF. The traders may further include secondary users of a final product, and recyclers. The final product supplied by the supply chain SC may be various articles, such as automobiles, batteries, semiconductors, fresh produce, seafood, foods, flowers, pharmaceuticals, and chemicals.

The information processing system 100 is capable of calculation and verification of carbon footprint in the entirety of the supply chain SC. The information processing system 100 treats items, such as materials, parts, assemblies, and final products, supplied via the supply chain SC as target objects IM. The information processing system 100 processes emissions information related to a greenhouse gas emission amount (hereinafter, referred to as GHG emission amount) associated with the target object IM. More specifically, the information processing system 100 treats the emissions information associated with the target object IM as the traceability information, and continuously collects and accumulates the emissions information. Furthermore, the information processing system 100 provides the accumulated emissions information to each trader, the end user EU, and supervisory authorities, etc.

To be specific, the information processing system 100 acquires primary data as the emissions information and accumulates the primary data in a database 20. The primary data indicates the GHG emission amount emitted during each process of manufacturing, distribution, and sales of the target object IM. The information processing system 100 may further be capable of acquiring a GHG emission amount associated with use and maintenance in the end user EU, a GHG emission amount in processes such as mining and recycling of raw materials, and a GHG emission amount in processes related to disposal such as incineration and landfilling. The information processing system 100 adds up the GHG emission amount of each trader based on the accumulated emissions information and visualizes the resulting data as a carbon footprint for each product of the target object IM. The information processing system 100 realizes traceability of the carbon footprint and also makes it possible to guarantee the certainty (validity of numerical values) of the carbon footprint.

As an example, within the European Union, all batteries sold for automobiles, industrial use, portable, and the like are required to display their carbon footprints (EU battery regulations). The information processing system 100 is suitable for application to a supply chain SC that supplies items such as batteries that are required to display carbon footprints.

The greenhouse gas whose emissions are recorded as the carbon footprints may include carbon dioxide only, or may include methane, nitrous oxide, hydrofluorocarbons, perfluorocarbons, sulfur hexafluoride, and the like, as appropriate. In this case, the emission of the greenhouse gas other than carbon dioxide is converted into an emission amount of carbon dioxide and is calculated into the carbon footprint to be displayed.

Configuration of Information Processing System 100The information processing system 100 includes a large number of data processing terminals 50, a data processing server 10, a time stamp server 30, and an application distribution server 40. A user terminal 110 may be further included in the configuration of the information processing system 100. Each element constituting the information processing system 100 is one node connected to the network, and is capable of communicating with each other.

The data processing terminal 50 is an information processing device operated by traders, such as the supplier SP, the transporter TP and the finished product manufacturer MF, involved in the manufacturing process of the final product supplied via the supply chain SC. The data processing terminal 50 is placed at a business base of the trader, for example. Items such as materials, parts, and assemblies shipped from business bases of upstream traders are delivered to each business base. The delivered items are processed at the business base in the current process, and are shipped as new items to the business base of the downstream trader.

Identification information for identifying individual items is attached to items exchanged between the traders. For the identification information, unique ID information (hereinafter, referred to as a unique ID) issued by the data processing server 10, a hash value generated with a predetermined number of bits, or the like is used. The identification information is stored in, for example, a two-dimensional code Cd such as a QR code (registered trademark) or an RF tag, and distributed together with products. The identification information may be updated for each trader, or the same information may be continuously used between multiple traders.

The data processing terminal 50 includes a control circuit 50a as a main component. The control circuit 50a includes a processor 51, a RAM 52, a storage unit 53, an input/output interface 54, and a bus connecting these components, and functions as a computer that executes calculation processing. The processor 51 is hardware for calculation processing coupled with the RAM 52. The processor 51 executes an application program (such as a traceability information accumulating program) stored in the storage unit 53. The traceability information accumulating program is a program for causing the data processing terminal 50 to execute the information accumulating method of the present disclosure. The input/output interface 54 is electrically connected to an input device such as a keyboard and mouse, a display, a reader such as a scanner or camera for reading the identification information, and a printer for outputting the identification information onto a paper medium or an RF tag, for example.

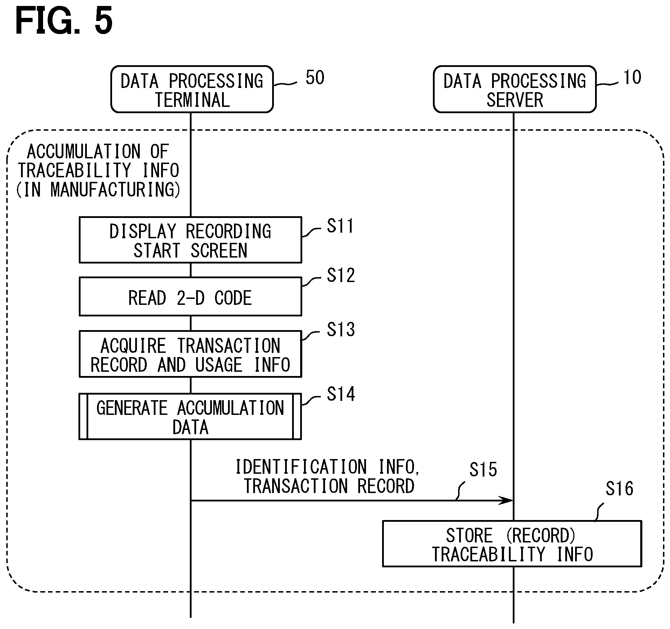

The data processing terminal 50 reads the identification information through processing (see FIG. 5) based on the traceability information accumulating program, and acquires information such as what was purchased from which trader (e.g., upstream supplier SP) and when it was delivered, as transaction records related to the product. Additionally, the data processing terminal 50 acquires emissions information indicating the GHG emission amount related to the manufacture of the product shipped from the current process. The data processing terminal 50 transmits, for example, the transaction records and the emissions information to the data processing server 10.

The data processing server 10, the time stamp server 30, and the application distribution server 40 are server devices operated by an administrator of the supply chain SC or a platform provider PF selected by the administrator. The administrator is, for example, a finished product manufacturer MF or a regulatory agency that has supervisory authority over the final product supplied via the supply chain SC. The platform provider PF is a business operator that provides large-scale information processing resources on the Internet, or an alliance (e.g., Catena-X) that aims to share data across the entire supply chain SC. The data processing server 10, the time stamp server 30, and the application distribution server 40 may be on-premises server devices that are physically managed by the administrator or the platform provider PF, or may be a virtual configuration provided on the cloud. The data processing server 10, the time stamp server 30, and the application distribution server 40 may be managed by mutually different administrators or platform providers PF.

The data processing server 10 is an information processing device that includes a control circuit 10a as a main component. The control circuit 10a includes a processor 11, a RAM 12, a storage unit 13, an input/output interface 14, and a bus connecting these components, and functions as a high-performance computer that executes calculation processing at high speed. The processor 11 is hardware for calculation processing coupled with the RAM 12. The processor 11 accesses the RAM 12 to execute various processes (instructions) related to data management and data provision. The storage unit 13 stores an information management program that implements functions related to the data management, and an information provision program that implements functions related to the data provision. The information management program is a program for causing the data processing server 10 to implement the information accumulating method of the present disclosure. The information provision program is a program (information processing program) for causing the data processing server 10 to execute the information processing method and the storage medium producing method of the present disclosure.

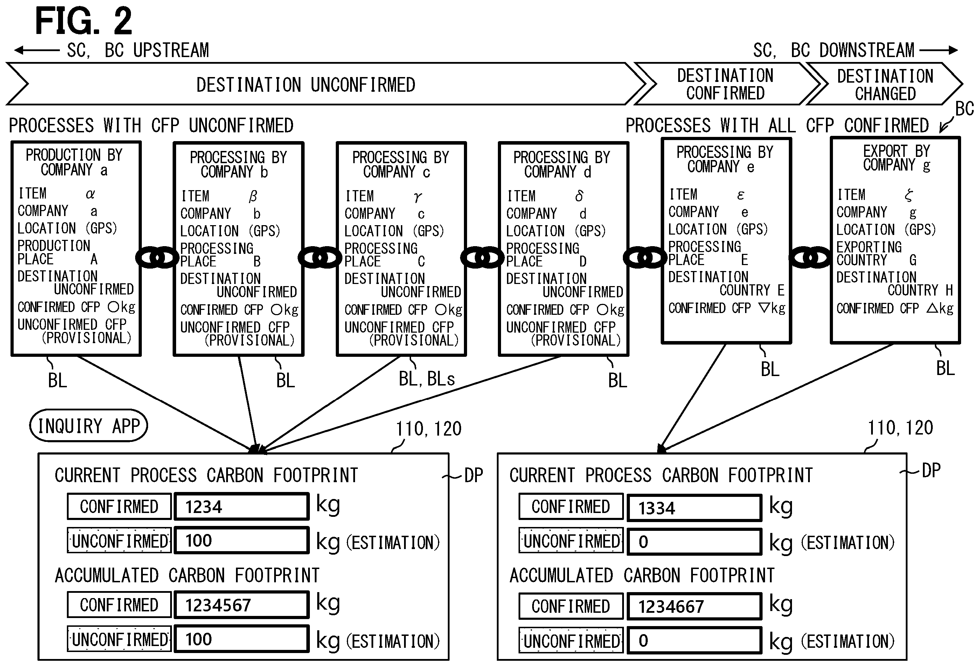

The data processing server 10 receives and acquires the transaction records and the emissions information transmitted by the data processing terminal 50. The data processing server 10 stores the acquired transaction records and emissions information in the database 20 as the traceability information of the target object IM. In the traceability information, a large number of accumulated emissions information are associated to each other based on the transaction records (see FIG. 2). The database 20 may be built within an on-premise file server managed by the platform provider PF, or may be built within a virtual file server provided on the cloud.

The database 20 uses a technology of blockchain BC to store storing-target data (i.e., traceability information) including the transaction records and the emissions information in a substantially tamper-proof state. As an example, the database 20 stores the storing-target data as a transaction in a block BL of a private blockchain BC. The database 20 hashes information stored in one block BL and stores the hashed information in the next block BL, thereby making it difficult to tamper with the storing-target data stored in each block (see FIG.2). As another example, the database 20 may make it substantially impossible to tamper with the storing-target data by storing a hash value generated from the storing-target data in a block BL of a consortium or public blockchain BC.

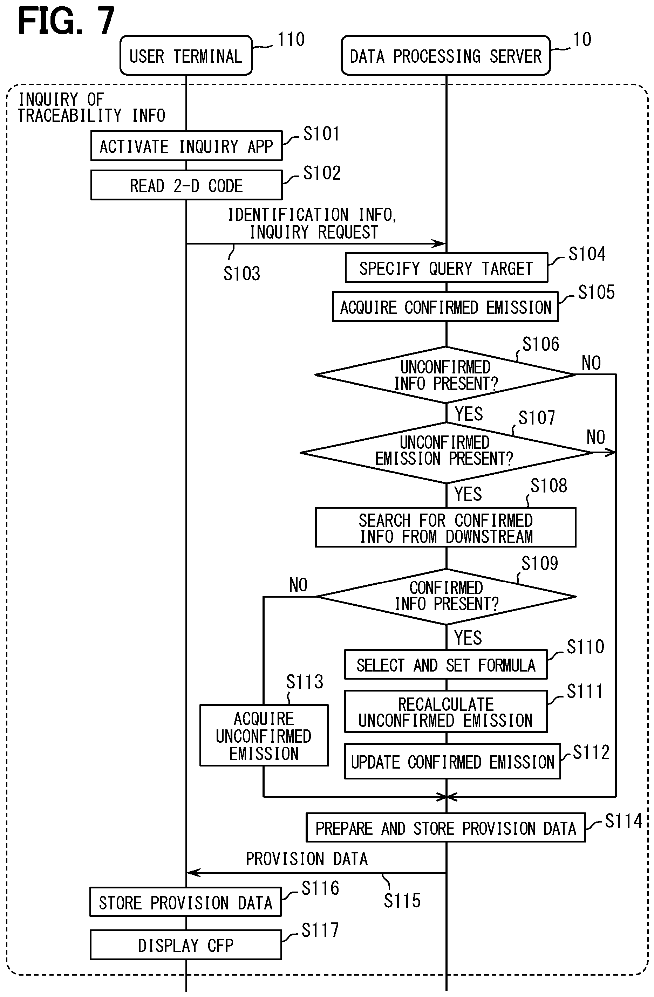

The data processing server 10 receives and acquires a carbon footprint inquiry request transmitted by a user terminal 110 (see FIG. 7). The data processing server 10 extracts the transaction record of the target object IM designated in the inquiry request from among the traceability information accumulated in the database 20. The data processing server 10 further extracts the emissions information related to the target object IM from the database 20 based on the transaction record. The data processing server 10 calculates a carbon footprint of the target object IM using the extracted emissions information, and transmits the calculated result as provision data to the user terminal 110 which is a request source.

The time stamp server 30 is a server device that includes a computer as a main component. The time stamp server 30 creates input information using news articles distributed by a news distribution server or the like. The time stamp server 30 generates a hash value with a predetermined number of bits (for example, 256 bits) as time stamp data by inputting the created input information into a hash function. The time stamp data is provided to the data processing server 10 and is stored in the database 20 together with the traceability information as verification data for verifying whether the acquisition time or storage time of the traceability information has been tampered with.

The application distribution server 40 is a server device that includes a computer as a main component. The application distribution server 40 distributes a traceability information inquiry application to the user terminal 110 via the network. The traceability information inquiry application is an application for inquiring about the transaction records and carbon footprints of distributed items or final products. The application distribution server 40 may distribute a carbon footprint inquiry application (hereinafter, referred to as a CFP inquiry application) specialized for inquiring about carbon footprints, in which the transaction record inquiry function is omitted. The traceability information inquiry application and the CFP inquiry application can be downloaded from the application distribution server 40 to a storage unit 113 of the user terminal 110, and is automatically installed on the user terminal 110 after the download has been completed. The application distribution server 40 may be, for example, a server device managed by a vendor of an operating system of the user terminal 110.

The user terminal 110 is, for example, a smartphone, a tablet terminal or a dedicated reading terminal, owned by the end user EU. The user terminal 110 includes a control circuit 110a, a display 120, a camera and a terminal communication device. The control circuit 110a includes a processor 111, a RAM 112, a storage unit 113, an input/output interface 114, and a bus connecting these components, and functions as a computer that executes calculation processing.

An inquiry application such as the above-described traceability information inquiry application or CFP inquiry application is installed in the user terminal 110. The inquiry application is a program (information processing program) for causing the user terminal 110 to execute the information processing method and storage medium producing method of the present disclosure. The user terminal 110 functions as an information display device by causing the processor 111 to execute the inquiry application, and displays carbon footprints on a display screen DP (see FIG. 2) of the display 120. The user terminal 110 cooperates with the data processing server 10 to execute a traceability information inquiry process (see FIG. 7) which will be described later.

### Challenges in Calculating Carbon Footprint

The above-described method of calculating the carbon footprint (GHG emission amount) is not uniquely determined, and is changed according to multiple conditions. More specifically, the method of calculating the carbon footprint varies depending on origins of an item, such as countries or regions where raw materials, parts, and assemblies of the item are produced. Furthermore, the method of calculating the carbon footprint varies depending on a destination of a final product, such as a country or region where the final product will be used. Furthermore, even when the destination of the final product is confirmed, the method of calculating the carbon footprint may be changed in a case where the product is sent to a different destination through secondary use, such as reuse or rebuilding.

And while information such as the country of origin and the country of processing may be clear at the time of production, the destination for the produced item is often not determined until after the final product is manufactured. Therefore, it can be difficult to calculate an accurate carbon footprint for each individual item at the time of its production.

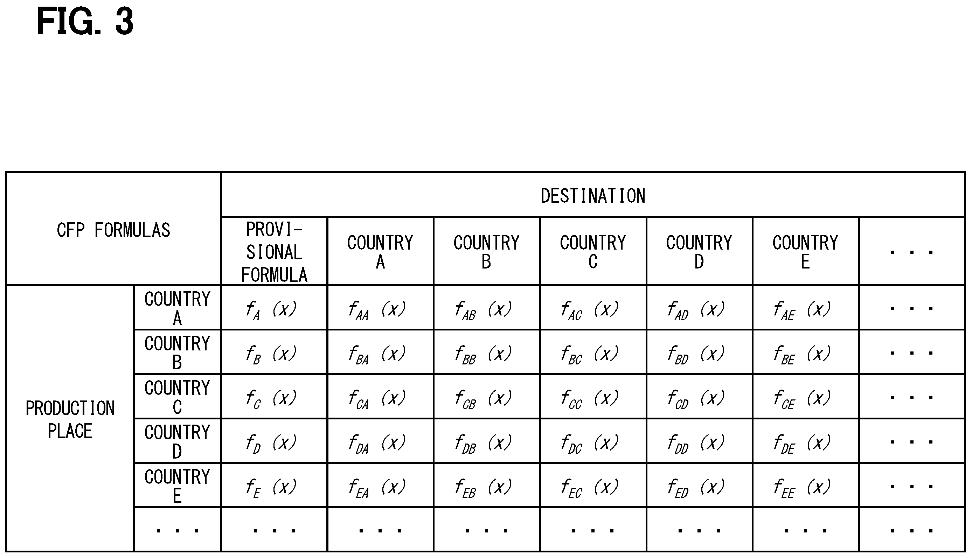

In light of the above circumstances, in the information processing system 100, multiple formulas (hereinafter, referred to as CFP formulas) for calculating carbon footprints are prepared in advance. The CFP formulas correspond to each of multiple production places and multiple destinations (see FIG. 3). Among these multiple CFP formulas, a CFP formula that corresponds to both a production place and a destination is selected and used as a corresponding formula.

In each CFP formula shown in FIG. 3, the first subscript is a letter indicating the production place, such as a country of raw material extraction or a country of processing. The second subscript is a letter indicating the destination. As an example, when the destination of a final product using items processed in countries A, B, C, and D is country E (see FIG. 2), f_{AE}(x), f_{BE}(x), f_{CE}(x), and f_{DE}(x) are selected as the corresponding formulas.

Furthermore, the multiple CFP formulas associated with each country of production include a provisional formula in addition to the CFP formulas for the respective destinations. When the destination is unconfirmed and there is an unconfirmed GHG emission amount, the provisional formula is used as a CFP formula for calculating the unconfirmed GHG emission amount as a provisional value.

As an example, the provisional formula may be set assuming that the production place of the item is the destination. In other words, the CFP formula f_{AA}(x) having country A as the production place and destination may be set as a provisional formula f_{A}(x) associated with country A. Similarly, the CFP formula f_{BB}(x) having country B as the production place and destination may be set as a provisional formula f_{B}(x) associated with country B.

As another example, the country that is most likely to be the destination of the final product may be set as a provisional destination, and a CFP formula corresponding to this provisional destination is set as the provisional formula. In other words, when there is a high possibility that the destination will be country E, the provisional formula f_{A}(x) for an item produced in country A may be set to be the same as f_{AE}(x).

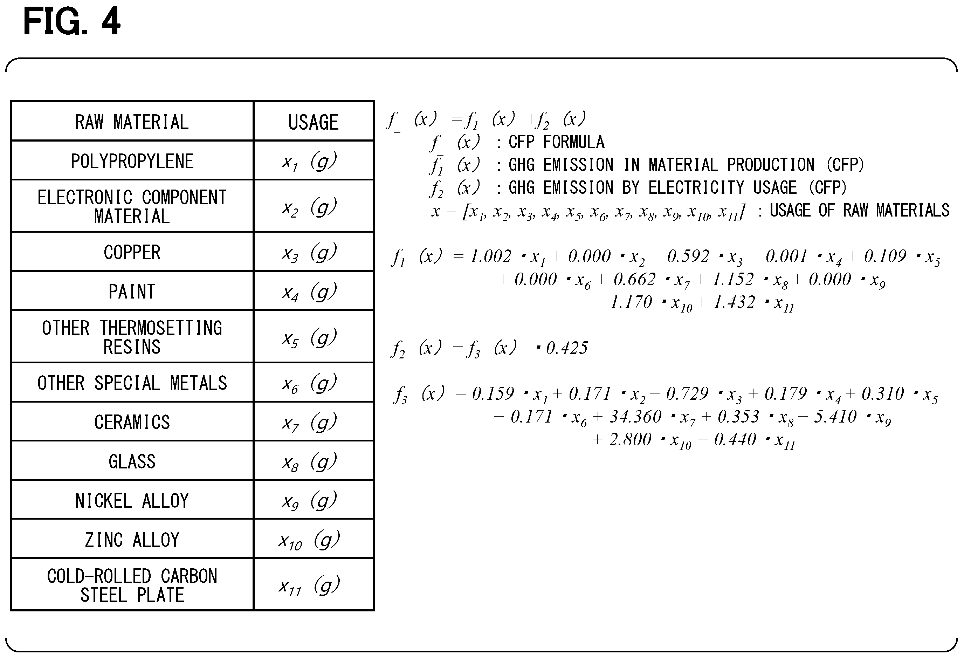

Here, the CFP formula will be described in more detail. As shown in FIG. 4, the GHG emission amount (carbon footprint) is calculated as a sum of a GHG emission amount f₁(x) associated with material production and a GHG emission amount f₂(x) associated with electricity usage. In the CFP formula, x substituted into each formula is a value (hereinafter, referred to as usage amount information) indicating an amount (weight) of a raw material used in producing the item. Furthermore, the GHG emission amount f₂(x) is calculated by multiplying f₃(x) by a predetermined constant (for example, 0.425). Then, f₁(x) and f₃(x) are calculated as the sum of the amounts (x₁ to x₁₁) of raw materials multiplied by constants corresponding to the respective raw materials.

### Accumulation Process of Carbon Footprint

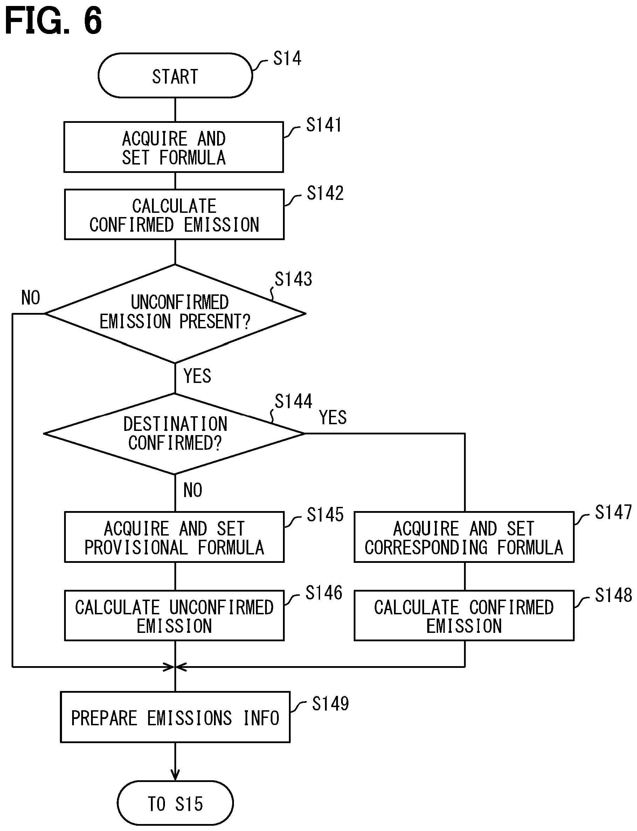

The data processing terminal 50 and the data processing server 10 execute the traceability information accumulating process. The traceability information accumulating process is a process of accumulating traceability information including the transaction record and the GHG emission amount in the database 20. The details of the traceability information accumulating process will be described below based on FIGS. 5 and 6 with reference to FIGS. 1 to 4.

The data processing terminal 50 displays a recording start screen on the display based on a staff operation for uploading data to the data processing server 10 (S11). With the recording start screen being displayed, the data processing terminal 50 reads identification information from the two-dimensional code Cd (or RF tag) attached to an item to be shipped (S12).

The data processing terminal 50 acquires a transaction record or the like of the item for which the two-dimensional code Cd has been read (S13). Furthermore, in addition to the transaction record, the data processing terminal 50 acquires usage information and the like necessary for calculating a GHG emission amount. The data processing terminal 50 may acquire a transaction record and usage information that are automatically acquired or automatically calculated based on information collected by a group of sensors installed at the manufacturing place, or may acquire values entered by a staff at the manufacturing place as a transaction record and usage information.

The data processing terminal 50 uses the acquired transaction record and usage information to generate accumulation data to be uploaded to the data processing server 10 (S14). The data processing terminal 50 transmits the identification information read from the two-dimensional code Cd and the generated accumulation data to the data processing server 10 (S15).

In the step of generating data for accumulation (S14), the data processing terminal 50 executes a sub-process (see FIG. 6) for generating emissions information. In this sub-processing, the data processing terminal 50 acquires and sets a CFP formula for calculating the confirmed GHG emission amount associated with the item (S141). The confirmed GHG emission amount is calculated by a calculation method that is unchanged even if the destination changes. In other words, the GHG emission amount is associated with raw materials that do not change in content of the CFP formula depending on the destination. The data processing terminal 50 substitutes the usage information (see FIG. 4) of each raw material used in the item into the CFP formula to calculate the confirmed GHG emission amount (confirmed data, confirmed CFP) (S142).

The data processing terminal 50 determines whether an unconfirmed GHG emission amount is present (S143). The unconfirmed GHG emission amount is calculated by a calculation method that is changed if the destination changes. In other words, the GHG emission amount is associated with raw materials that change in content of the CFP formula depending on the destination. When the unconfirmed GHG emission amount is absent (S143: NO), the data processing terminal 50 prepares emissions information including at least the confirmed GHG emission amount and the usage information (calculation information) used to calculate the confirmed GHG emission amount (S149).

When the unconfirmed GHG emission amount is present (S143: YES), the data processing terminal 50 determines whether the destination has already been confirmed (S144). When the destination is unconfirmed, i.e., there is no confirmed information about the destination (S144: NO), the data processing terminal 50 acquires and sets a provisional formula associated with the production place of the item (S145). In S145, the provisional formula is set, in which the production place of the item is regarded as the destination.

The data processing terminal 50 substitutes the usage information (weight value) of the raw materials used in the item into the provisional formula, and calculates the unconfirmed GHG emission amount (unconfirmed data, unconfirmed CFP) (S146). The data processing terminal 50 prepares emissions information including at least the confirmed GHG emission amount, the unconfirmed GHG emission amount, and the usage information used in calculating these GHG emission amounts (S149).

When the destination is confirmed, i.e., there is confirmed information about the destination (S144: YES), the data processing terminal 50 acquires and sets a corresponding formula corresponding to both the production place and the destination (S147). The data processing terminal 50 substitutes the usage information of the raw materials used in the item into the corresponding formula, and calculates the GHG emission amount (additional confirmed data) that has been confirmed due to the confirmation of the destination. Furthermore, the data processing terminal 50 adds the newly calculated GHG emission amount to the GHG emission amount calculated in S142, and sets the sum as the confirmed GHG emission amount (S148). The data processing terminal 50 prepares emissions information including at least the updated and confirmed GHG emission amount and the usage information used in calculating this GHG emission amount (S149).

The data processing server 10 receives and acquires the identification information, the accumulation data, and the like transmitted by the data processing terminal 50 (S15). The data processing server 10 stores the identification information and the accumulation data in a state where they are linked to each other as the traceability information in the database 20 (S16). The traceability information is stored in the database 20 in association with the blockchain BC. The data processing server 10 may store acquisition time (reception time) of the traceability information in association with the traceability information.

According to the above storage process (S16), the name of the item, the name of the company that produced the item, the location of the manufacturing base (GPS information), information on the production place, information on the destination, the confirmed GHG emission amount (confirmed CFP), and the unconfirmed GHG emission amount (unconfirmed CFP), etc. are accumulated (see FIG. 2). When the destination has not been confirmed, the message "UNCONFIRMED" will be stored as destination information. The method of storing such a message indicating that the destination is unconfirmed can be changed as appropriate. Furthermore, the usage information used in calculation of the GHG emission amount is also linked to the item and stored in the database 20 (block BL). The usage information is used as "calculation information" (described later) for recalculating the GHG emission amount.

### Inquiry Process of Carbon Footprint

The user terminal 110 and the data processing server 10 disclose the transaction records and carbon footprint (emissions information) of the target object IM to the end user EU etc. through the traceability information inquiry process. The traceability information inquiry process will be described in detail below based on FIG. 7 with reference to FIGS. 1 to 4.

In place of the user terminal 110, an information processing terminal owned by a trader, such as the data processing terminal 50, may be used for the traceability information inquiry process. In this way, the present disclosure is not limited to the user terminal 110, and various information processing terminals such as smartphones, tablet terminals, and personal computers can be used to display carbon footprints.

The user terminal 110 activates the inquiry application through an operation of the end user EU or the like (S101). The user terminal 110 sets an item such as a product or a final product as the target object IM of inquiry, and reads identification information from a two-dimensional code Cd (or an RF tag) attached to this target object IM (S102). The identification information may be input manually using an input device such as a keyboard, or may be acquired through the network. The user terminal 110 transmits the read identification information to the data processing server 10 together with a query request for querying the traceability information of the target object IM (S103).

Upon receiving the query request (S103), the data processing server 10 specifies the target object IM that is the target of the query based on the identification information (S104). The data processing server 10 searches for traceability information linked to the target object IM from among a large amount of traceability information stored in the database 20. The data processing server 10 acquires the confirmed GHG emission amount included in the traceability information of the searched object IM (S105).

The data processing server 10 determines whether the traceability information of the searched object IM includes unconfirmed information indicating that the destination is unconfirmed (S106). For example, when the target object IM is any of items α, β, γ and δ shown in FIG. 2, the destination is "unconfirmed", and unconfirmed information is present in the traceability information. On the other hand, when the target object IM is an item ε or ζ shown in FIG. 2, the destination is confirmed to be a specific country, and unconfirmed information is absent in the traceability information. When unconfirmed information is absent (S106: NO), that is, when the destination was already confirmed at the time of production, the data processing server 10 assumes that there is no unconfirmed GHG emission amount, and prepares (generates) provision data that includes the confirmed GHG emission amount (S114).

In this case, the provision data includes a confirmed value for the carbon footprint of the current process in which the target object IM was produced (hereinafter, referred to as current process CFP), and a confirmed value for the accumulated carbon footprint (hereinafter, referred to as accumulated CFP), which is the accumulated GHG emissions up to the current process. The units of both the current process CFP and the accumulated CFP are "kg". The unconfirmed amounts of the current process CFP and the accumulated CFP are both set to 0 kg (none).

When unconfirmed information is present (S106: YES), the data processing server 10 determines whether an unconfirmed GHG emission amount is present in the traceability information of the target object IM (S107). The data processing server 10 determines whether an unconfirmed GHG emission amount is present in the current process and in the process upstream of the current process (on the left side of FIG. 2). When an unconfirmed GHG emission amount is absent (S107: NO), the data processing server 10 prepares (generates) provision data including the confirmed GHG emission amounts of the current process value and the accumulated value (S114). Also in this case, the unconfirmed amount of the current process CFP and the unconfirmed amount of the accumulated CFP are both set to 0 kg.

When unconfirmed GHG information is present (S107: YES), the data processing server 10 searches for confirmed information in the traceability information (blockchain BC) associated with the target object IM (S108). The data processing server 10 searches for confirmed information in chronological order in blocks BL that are positioned downstream of a specific block BLs (see FIG. 2) to which the target object IM is linked, among the multiple blocks BL forming the blockchain BC. As an example, when an item γ is the target object IM, the block BL linked to the item γ is set as the specific block BLs. The data processing server 10 sequentially searches the blocks BL downstream (on the right side of FIG. 2) of the specific block BLs in the blockchain BC (supply chain SC), and determines whether confirmed information is present.

When there are multiple pieces of confirmed information in the traceability information, the data processing server 10 acquires the most recent confirmed information among the multiple pieces of confirmed information. More specifically, in the step of searching for confirmed information, the data processing server 10 extracts confirmed information of the first destination (Country E) from the block BL (traceability information) linked to the item ε. In this case, the data processing server 10 continues searching for the confirmed information on the condition that there is a further block BL connected downstream of the block BL containing the confirmed information. As a result, the data processing server 10 extracts newer confirmed information (Country H) from the block BL (traceability information) linked to the item ζ.

The data processing server 10 determines whether the confirmed information has been acquired by the searching (S109). When the confirmed information of the destination is stored in the blockchain BC and the confirmed information can be acquired from the downstream traceability information (S109: YES), the data processing server 10 selects a corresponding formula from the CFP formulas (see FIG. 3) prepared in advance (S110). The corresponding formula is a CFP formula that corresponds to both the destination indicated by the confirmed information and the production place of the target item IM. The data processing server 10 acquires and sets the corresponding formula.

The data processing server 10 uses the selected corresponding formula to calculate recalculation data in which the unconfirmed GHG emission amount is confirmed (S111). The data processing server 10 searches the traceability information for calculation information (usage information, which corresponds to the value of x in FIG. 3 and FIG. 4) used in calculating the unconfirmed GHG emission amount. The data processing server 10 substitutes the calculation information acquired by the search into the corresponding formula, thereby calculating an additionally confirmed GHG emission amount as the recalculation data. The data processing server 10 calculates the additionally confirmed GHG emission amount not only for the current process but also for upstream processes based on the calculation information stored in upstream blocks BL and corresponding formulas. In other words, unconfirmed GHG emission amounts in the upstream processes are confirmed.

The data processing server 10 adds the GHG emission amount recalculated in S111 to the GHG emission amount acquired in S105, thereby updating the confirmed GHG emission amount (S112). The data processing server 10 updates the confirmed GHG emission amount for the current process value and the accumulated value. The data processing server 10 prepares (generates) provision data that includes the updated and confirmed GHG emission amounts (S114). Also in this case, the unconfirmed amount of the current process CFP and the unconfirmed amount of the accumulated CFP are both set to 0 kg.

When confirmed information cannot be acquired from the downstream traceability information (S109: NO), the data processing server 10 acquires and prepares the unconfirmed GHG emission amount stored in the traceability information (S113). The data processing server 10 prepares (generates) provision data including the confirmed GHG emission amount acquired in S105 and the unconfirmed GHG emission amount acquired in S113 (S114). In addition, when all GHG emission amounts are unconfirmed, the confirmed GHG emission amount will be stored as 0 kg (none) in the provision data.

The data processing server 10 stores the generated provision data, in other words, emissions information including the confirmed CFP emission amount and the unconfirmed CFP emission amount, in the storage unit 13. In this manner, a storage medium storing the emissions information is produced. Furthermore, the data processing server 10 transmits the generated provision data to the user terminal 110 that is a request source of the inquiry request (S115).

The user terminal 110 acquires the provision data (emissions information of the target object IM) by receiving it from the data processing server 10 (S115). The user terminal 110 stores emissions information including the confirmed CFP emission amount and the unconfirmed CFP emission amount in the storage unit 113 (S116). In this manner, a storage medium storing the emissions information and an information processing device including the storage medium are produced.

The user terminal 110 displays a value based on the provision data on the display screen DP of the display 120 as the carbon footprint of the target object IM (S117). The user terminal 110 displays the confirmed and unconfirmed carbon footprints in the current process in which the target object IM is produced, and the confirmed and unconfirmed carbon footprints in the accumulation related to the production of the target object IM. The unit of the carbon footprint value is not limited to "kg" and may be changed as appropriate depending on the type of target object IM and the region or country in which the data processing server 10 or the user terminal 110 is used.

In the embodiment described above, when there is no confirmed information on the destination of the target object IM, the unconfirmed GHG emission amount (unconfirmed data) calculated using a provisional formula is prepared separately from the confirmed GHG emission amount (confirmed data). In this way, by separating the unconfirmed GHG emission amount from the confirmed GHG emission amount, the unconfirmed GHG emission amount can be appropriately handled. As a result, convenience of the carbon footprint can be improved.

Additionally, in the embodiment, in the step of searching for confirmed information, if there are multiple pieces of confirmed information in the traceability information, the most recent confirmed information among the multiple pieces of confirmed information is acquired. Therefore, even if there is secondary utilization, such as reuse or rebuilt, of the final product, the GHG emission amount can be accurately calculated. This makes it possible to further ensure the accuracy of carbon footprints.

In the embodiment, when there is unconfirmed information indicating that the destination is unconfirmed, a search for confirmed information is executed. As described above, if a message indicating that the destination is unconfirmed is stored as traceability information, the data processing server 10 can appropriately determine whether it is necessary to search for confirmed information. As a result, a recalculation process for confirming the unconfirmed GHG emission amount can be appropriately executed.

Furthermore, the traceability information in the embodiment is stored using blockchain BC technology. Then, among the multiple blocks BL forming the blockchain BC, blocks BL located downstream of the specific block BLs to which the target object IM is linked is searched in chronological order for the confirmed information. This search process makes it possible to reliably extract the confirmation information necessary to confirm the unconfirmed GHG emission amount from the traceability information stored in the blockchain BC. If there is no confirmed information in the traceability information, a provisional GHG emission amount based on a provisional formula is presented as the carbon footprint.

Additionally, in the embodiment, when the traceability information includes confirmed information, a corresponding formula corresponding to both the destination indicated by the confirmed information and the production place of the target item IM is selected. Then, recalculation data in which the unconfirmed GHG emission amount is confirmed is calculated with the selected corresponding formula, and this recalculation data is added to the confirmed GHG emission amount. Accordingly, it is possible to present a confirmed GHG emission amount, i.e., an accurate carbon footprint, at the time when the destination is confirmed.

Furthermore, in the embodiment, the traceability information is searched to find calculation information (usage information) used in calculation of the unconfirmed GHG emission amount. Then, by substituting the calculation information acquired by the search into the corresponding formula, recalculation data in which the unconfirmed GHG emission amount is confirmed is calculated. As described above, since the calculation information used in calculation of the unconfirmed GHG emission amount is used in the recalculation process, the accuracy of the value of the additional confirmed GHG emission amount (recalculation data) is more easily ensured. As a result, the unconfirmed GHG emission amount can be appropriately handled.

Furthermore, in the embodiment, when the destination of the target object IM is unconfirmed, the unconfirmed GHG emission amount (unconfirmed data) is calculated using a provisional formula. The unconfirmed GHG emission amount prepared separately from the confirmed GHG emission amount (confirmed data) is stored in the database 20 together with unconfirmed information indicating that the destination is unconfirmed. In other words, the unconfirmed GHG emission amount is separated from the confirmed GHG emission amount, and the cause of the unconfirmed GHG emission amount, i.e., the unconfirmed information on the destination is clearly indicated. Accordingly, the unconfirmed GHG emission amount can be appropriately handled. As a result, convenience of the carbon footprint can be improved.

Additionally, in the embodiment, a provisional formula is set assuming that the production place of the target object IM is the destination. By setting such a provisional formula, even though the unconfirmed GHG emission amount is calculated as a provisional value, the unconfirmed GHG emission amount is unlikely to deviate significantly from the confirmed GHG emission amount.

Furthermore, in the embodiment, the calculation information (usage information) used in calculation of the unconfirmed GHG emission amount is stored in the database 20 and the stored calculation information is linked to the unconfirmed GHG emission amount. Therefore, the calculation information used in calculation of the unconfirmed GHG emission amount can be used as is in the recalculation process of the GHG emission amount after the destination is confirmed. As a result, the accuracy of the additionally confirmed GHG emission amount (recalculation data) can be more easily ensured.

In the embodiment, each of the storage units 13 and 113 corresponds to a "storage medium."

Although one embodiment of the present disclosure has been described above, the present disclosure is not construed as being limited to the above-mentioned embodiment, and can be applied to various embodiments and combinations within a scope that does not depart from the gist of the present disclosure.

In the above embodiment, confirmed data and unconfirmed data are prepared for each of the GHG emission amount in the current process (current process CFP) and the accumulated GHG emission amount (accumulated CFP), and are stored in the storage medium as confirmed CFP and unconfirmed CFP. On the other hand, in a first modification of the above embodiment, confirmed data and unconfirmed data are prepared for only one of the GHG emission amount in the current process and the accumulated GHG emission amount, and are stored in the storage medium as the confirmed CFP and the unconfirmed CFP.

In a second modification of the above embodiment, confirmed information on the first destination is acquired for generating the recalculation data. As in the second modification, recalculation of the carbon footprint to reflect secondary utilization, such as reuse or rebuild, does not need to be executed.

In a third modification of the above embodiment, a group of blocks BL connected downstream of the block BL that stores information about the target object IM are identified in the blockchain BC, and then search for confirmed information is started from the latest block BL. As in the third modification, the method of searching for confirmed information on the destination may be modified as appropriate. Furthermore, when the security of the database 20 is sufficient, blockchain BC technology does not need to be used to store the traceability information.

In the above embodiment, all usage information related to an item is uploaded to the data processing server 10. On the other hand, in a fourth modification of the above embodiment, only usage information used in calculation of the unconfirmed GHG emission amount, in other words, only usage information required for recalculation to confirm the unconfirmed GHG emission amount, is uploaded to the data processing server 10 as calculation information.

In the above embodiment, each function provided by the data processing server 10 and each of the terminals 50, 110 can be provided by software and hardware that executes the software, only software, only hardware, or a complex combination thereof. In cases where these functions are provided by electronic circuits as hardware, the respective functions can be also provided by analog circuits or digital circuits which include a large number of logic circuits.

In the aforementioned embodiment, the respective processers may include at least one processing core, such as a CPU (Central Processing Unit) or a GPU (Graphics Processing Unit). The processors may further include a field-programmable gate array (FPGA), a neural network processing unit (NPU), and/or an IP core with other dedicated functions. Additionally, each of the processors is not limited to being a chip configuration in which chips are individually mounted on a printed circuit board. The processors may be incorporated in an application specific integrated circuit (ASIC), a system on chip (SoC), or a FPGA.

The form of the storage medium (non-transitory tangible storage medium), which is employed as each of the storage units in the above embodiments and stores each program, may be changed as appropriate. For example, the storage medium is not limited to the configuration provided on the circuit board, and may be provided in the form of a memory card or the like. The storage medium may be inserted into a slot portion, and electrically connected to the computer bus. The storage medium may be an optical disc, a hard disk drive, or the like used as a source of copying or distributing a program to a computer.

The control circuit and the method thereof which have been described in the present disclosure may be also implemented by a special purpose computer which includes a processor programmed to execute one or more functions implemented by a computer program. Alternatively, the control circuit and the control method described in the present disclosure may be implemented by a special purpose hardware logic circuit. Alternatively, the control circuit and the control method described in the present disclosure may be implemented by one or more special purpose computers configured by a combination of a processor executing a computer program and one or more hardware logic circuits. The computer program may be stored in a computer-readable non-transitory tangible storage medium as an instruction executed by a computer.

## Claims

1. An information processing method executed by at least one processor (11) for generating emissions information relating to an emission amount of greenhouse gas associated with an object (IM), the method comprising:
a step (S108) of searching traceability information of the object for confirmed information about a destination of the object based on the emission amount associated with the object including an unconfirmed amount due to the destination of the object being unconfirmed;
**characterized in that** the method further comprising:
a step (S114) of preparing confirmed data and unconfirmed data separately from each other, where confirmed data portion is calculated based on data that is destination independent and is present even when the destination is unconfirmed, and the unconfirmed data portion is calculated using a provisional formula and indicating the unconfirmed amount of the emission, when the destination is unconfirmed.

2. The information processing method according to claim 1, wherein
the step of searching for the confirmed information includes acquiring a latest piece of confirmed information based on multiple pieces of confirmed information about the destination being present in the traceability information.

3. The information processing method according to claim 1 or 2, wherein
the step of searching for the confirmed information includes searching for the confirmed information based on unconfirmed information indicating that the destination is unconfirmed.

4. The information processing method according to any one of claims 1 to 3, wherein
the traceability information is stored using blockchain (BC) technology, and
the step of searching for the confirmed information includes searching blocks downstream of a specific block (BLs) for the confirmed information in chronological order, the specific block being linked to the object among multiple blocks (BL) forming the blockchain.

5. The information processing method according to any one of claims 1 to 4, further comprising:
a step (S110) of selecting a corresponding formula based on the confirmed information about the destination being present in the traceability information, the corresponding formula being a formula corresponding to both the destination and a production place of the object indicated by the confirmed information;
a step (S111) of calculating recalculation data in which the unconfirmed amount of the emission amount is confirmed by using the corresponding formula selected; and
a step (S112) of adding the recalculation data to the confirmed data.

6. The information processing method according to claim 5, wherein
the step of calculating the recalculation data includes
searching the traceability information for calculation information used in calculation of the unconfirmed data, and
calculating the recalculation data by substituting the calculation information into the corresponding formula.

7. The information processing method according to any one of claims 1 to 6, further comprising
a step (S117) of displaying the confirmed data and the unconfirmed data.

## Patentansprüche

1. Informationsverarbeitungsverfahren, das von mindestens einem Prozessor (11) ausgeführt wird, um Emissionsinformationen zu erzeugen, die auf eine Emissionsmenge von Treibhausgas, die einem Objekt (IM) zugeordnet ist, bezogen sind, wobei das Verfahren aufweist:
einen Schritt (S108) eines Absuchens von Rückverfolgbarkeitsinformationen des Objekts nach bestätigten Informationen über ein Ziel des Objekts basierend auf der Emissionsmenge, die dem Objekt zugeordnet ist, einschließlich einer nicht bestätigten Menge aufgrund dessen, da das Ziel des Objekts nicht bestätigt ist;
**dadurch gekennzeichnet, dass** das Verfahren des Weiteren aufweist:
einen Schritt (S114) eines voneinander getrennten Vorbereitens von bestätigten Daten und nicht bestätigten Daten, wobei ein bestätigter Datenabschnitt basierend auf Daten, die zielunabhängig sind und vorhanden sind, selbst wenn das Ziel nicht bestätigt ist, berechnet wird und der nicht bestätigte Datenabschnitt unter Verwendung einer vorläufigen Formel berechnet wird und die nicht bestätigte Emissionsmenge kennzeichnet, wenn das Ziel nicht bestätigt ist.

2. Informationsverarbeitungsverfahren nach Anspruch 1, wobei
der Schritt eines Absuchens nach den bestätigten Informationen ein Erlangen eines jüngsten Stücks von bestätigten Informationen basierend auf mehreren Stücken von bestätigten Informationen über das Ziel, die in den Rückverfolgbarkeitsinformationen vorhanden sind, enthält.

3. Informationsverarbeitungsverfahren nach Anspruch 1 oder 2, wobei
der Schritt eines Absuchens nach den bestätigten Informationen ein Absuchen nach den bestätigten Informationen basierend auf nicht bestätigten Informationen, die kennzeichnen, dass das Ziel nicht bestätigt ist, enthält.

4. Informationsverarbeitungsverfahren nach einem der Ansprüche 1 bis 3, wobei
die Rückverfolgbarkeitsinformationen unter Verwendung einer Blockchain-Technologie (BC-Technologie) gespeichert werden, und
der Schritt eines Absuchens nach den bestätigten Informationen ein Absuchen von Blöcken, die einem spezifischen Block (BLs) nachgeschaltet sind, nach den bestätigten Informationen in chronologischer Reihenfolge enthält, wobei der spezifische Block unter mehreren Blöcken (BL), die die Blockchain bilden, mit dem Objekt verknüpft ist.

5. Informationsverarbeitungsverfahren nach einem der Ansprüche 1 bis 4, das des Weiteren aufweist:
einen Schritt (S110) eines Auswählens einer entsprechenden Formel basierend auf den bestätigten Informationen über das Ziel, die in den Rückverfolgbarkeitsinformationen vorhanden sind, wobei die entsprechende Formel eine Formel ist, die sowohl dem Ziel als auch einem Produktionsort des Objekts, die durch die bestätigten Informationen gekennzeichnet sind, entspricht;
einen Schritt (S111) eines Berechnens von Neuberechnungsdaten, in denen die nicht bestätigte Menge der Emissionsmenge unter Verwendung der ausgewählten entsprechenden Formel bestätigt wird; und
einen Schritt (S112) eines Hinzufügens der Neuberechnungsdaten zu den bestätigten Daten.

6. Informationsverarbeitungsverfahren nach Anspruch 5, wobei
der Schritt eines Berechnens der Neuberechnungsdaten enthält
ein Absuchen der Rückverfolgbarkeitsinformationen nach Berechnungsinformationen, die in einer Berechnung der nicht bestätigten Daten verwendet werden, und
ein Berechnen der Neuberechnungsdaten durch ein Substituieren der Berechnungsinformationen in der entsprechenden Formel.

7. Informationsverarbeitungsverfahren nach einem der Ansprüche 1 bis 6, das des Weiteren aufweist:
einen Schritt (S117) eines Anzeigens der bestätigten Daten und der nicht bestätigten Daten.

## Revendications

1. Procédé de traitement d'informations exécuté par au moins un processeur (11) pour générer des informations sur des émissions relatives à une quantité d'émissions de gaz à effet de serre associés à un objet (IM), le procédé comprenant :
une étape (5108) de recherche d'informations de traçabilité de l'objet pour des informations confirmées sur une destination de l'objet sur la base de la quantité d'émission associée à l'objet incluant une quantité non confirmée en raison du fait que la destination de l'objet n'est pas confirmée ;
**caractérisé en ce que** le procédé comprend en outre :
une étape (5114) de préparation de données confirmées et de données non confirmées séparément les unes des autres, où la partie de données confirmées est calculée sur la base de données qui sont indépendantes de la destination et sont présentes même lorsque la destination n'est pas confirmée et la partie de données non confirmées est calculée à l'aide d'une formule provisoire et indiquant la quantité non confirmée de l'émission, lorsque la destination n'est pas confirmée.

2. Procédé de traitement d'informations selon la revendication 1, dans lequel
l'étape de recherche des informations confirmées inclut l'acquisition d'une information confirmée récente sur la base de multiples informations confirmées concernant la destination qui sont présentes dans les informations de traçabilité.

3. Procédé de traitement d'informations selon la revendication 1 ou 2, dans lequel
l'étape de recherche des informations confirmées inclut la recherche des informations confirmées sur la base d'informations non confirmées indiquant que la destination n'est pas confirmée.

4. Procédé de traitement d'informations selon l'une quelconque des revendications 1 à 3, dans lequel
les informations de traçabilité sont stockées à l'aide de la technologie blockchain (BC), et
l'étape de recherche des informations confirmées inclut une recherche de blocs en aval d'un bloc spécifique (BL) pour les informations confirmées dans l'ordre chronologique, le bloc spécifique étant lié à l'objet parmi de multiples blocs (BL) formant la blockchain.

5. Procédé de traitement d'informations selon l'une quelconque des revendications 1 à 4, comprenant en outre :
une étape (5110) de sélection d'une formule correspondante sur la base des informations confirmées concernant la destination qui sont présentes dans les informations de traçabilité, la formule correspondante étant une formule correspondant à la fois à la destination et à un lieu de production de l'objet indiqué par les informations confirmées ;
une étape (5111) de calcul de données de recalcul dans laquelle la quantité non confirmée de la quantité d'émission est confirmée à l'aide de la formule correspondante sélectionnée ; et
une étape (5112) d'ajout des données de recalcul aux données confirmées.

6. Procédé de traitement d'informations selon la revendication 5, dans lequel
l'étape de calcul des données de recalcul inclut
la recherche des informations de traçabilité pour des informations de calcul utilisées dans le calcul des données non confirmées, et
le calcul des données de recalcul en substituant les informations de calcul dans la formule correspondante.

7. Procédé de traitement d'informations selon l'une quelconque des revendications 1 à 6, comprenant en outre
une étape (5117) d'affichage des données confirmées et des données non confirmées.
